# EUROPEAN PATENT APPLICATION

(11) **EP 4 850 943 A1**
(43) Date of publication of application: **09.12.2026**
(21) Application number: 26172436.3
(22) Date of filing: 15.04.2026
(51) Int. Cl.: B60K 1/00, B60K 5/12

(54) **VEHICLE DRIVING DEVICE**

(30) Priority: 03.06.2025 JP 2025092669
(71) Applicant: Suzuki Motor Corporation, Hamamatsu-shi, Shizuoka 432-8611 (JP)
(72) Inventor: KUNIMATSU, Hideki, Hamamatsu-shi, 432-8611 (JP); ISHIGAMI, Ryusei, Hamamatsu-shi, 432-8611 (JP); KAMOSHIDA, Hiroyuki, Hamamatsu-shi, 432-8611 (JP)
(74) Representative: Haseltine Lake Kempner LLP

(57) **Abstract**

[Problem to be Solved]

To provide a vehicle driving device (4) that can effectively reduce vibration by improving the attachment position of a rear mounting bracket (15) on a driving case (11).

[Solution]

In a driving device (4), a rear wall portion (11h) of an inverter housing portion (11B) and a rear wall portion (11d) of a differential housing portion (11C) include a projecting portion (11i) projecting rearward from the rear wall portions (11h, 11d) and extending in an up-down direction. When a vehicle is viewed from behind, an upper end portion (11v) of the projecting portion (11i) overlaps with an inverter (6) in the up-down direction, and a lower end portion (11w) of the projecting portion (11i) extends downward toward a differential device (8). An upper fastening portion provided at an upper end portion of a mounting bracket (15) is fastened to an upper boss portion (11j), and a lower fastening portion provided at a lower end portion of the mounting bracket (15) is fastened to a lower portion of the rear wall portion (11d).

## Description

### [Technical Field]

The present invention relates to a vehicle driving device.

### [Background Art]

Conventionally, a mounting structure has been known that supports a powerplant, including a motor and a transaxle to which the motor is connected, on a vehicle body (see Patent Literature 1).

The mounting structure includes a bracket that connects a first stay extending from the motor and a second stay extending from the transaxle, together to mount the powerplant on the vehicle body.

The mounting structure allows the connection rigidity between the motor and transaxle to be increased, thereby suppressing bending vibration of the motor and the transaxle.

### [Citation List]

### [Patent Literature]

[Patent Literature 1] JP2021-11165A

### [Summary of Invention]

### [Technical Problem]

However, in the conventional mounting structure, the first stay and the second stay are merely fastened to the motor and the transaxle, and the fastening positions on the motor and the transaxle are not improved. Therefore, bending vibration of the motor and the transaxle cannot be reduced with sufficient effectiveness.

The present invention has been made in view of the above-mentioned circumstance, and it is an object of the present invention to provide a vehicle driving device that can effectively reduce vibration by improving the attachment position of the rear mounting bracket on the driving case.

### [Solution to Problem]

The present invention provides a vehicle driving device including: a rotary electric machine; a differential device disposed behind the rotary electric machine and configured to transmit power from the rotary electric machine to a driving wheel; an electric power control device disposed above the rotary electric machine and the differential device and configured to control electric power to be supplied to the rotary electric machine; a driving case configured to house the rotary electric machine, the differential device, and the electric power control device; and a rear mounting device including a rear mounting bracket and configured to support a rear wall portion of the driving case on a vehicle body member, the vehicle driving device being characterized in that: the rear wall portion of the driving case includes a projecting portion projecting rearward from the rear wall portion of the driving case and extending in an up-down direction; when a vehicle is viewed from behind, an upper end portion of the projecting portion overlaps with the electric power control device in the up-down direction, and a lower end portion of the projecting portion extends downward toward the differential device; an upper end portion of the rear mounting bracket is fastened to the projecting portion; and a lower end portion of the rear mounting bracket is fastened to a lower portion of the rear wall portion of the driving case.

### [Advantageous Effect of Invention]

In this manner, according to the present invention described above, it is possible to effectively reduce vibration of the vehicle driving device by improving the attachment position of the rear mounting bracket on the driving case.

### [Brief Description of Drawings]

[Figure 1] Figure 1 is a plan view of a vehicle driving device according to one embodiment of the present invention.
[Figure 2] Figure 2 is a right side view of the vehicle driving device according to one embodiment of the present invention.
[Figure 3] Figure 3 is a back view of the vehicle driving device according to one embodiment of the present invention.
[Figure 4] Figure 4 is a perspective view of the vehicle driving device according to one embodiment of the present invention, and shows a state in which a mounting device is not attached.
[Figure 5] Figure 5 is a back view of the vehicle driving device according to one embodiment of the present invention, and shows the state in which the mounting device is not attached.
[Figure 6] Figure 6 is a back view of the vehicle driving device according to one embodiment of the present invention, and shows a state in which a mounting bracket is attached.
[Figure 7] Figure 7 is a front view of the mounting device according to one embodiment of the present invention.

### [Description of Embodiment]

A vehicle driving device according to one embodiment of the present invention includes: a rotary electric machine; a differential device disposed behind the rotary electric machine and configured to transmit power from the rotary electric machine to a driving wheel; an electric power control device disposed above the rotary electric machine and the differential device and configured to control electric power to be supplied to the rotary electric machine; a driving case configured to house the rotary electric machine, the differential device, and the electric power control device; and a rear mounting device including a rear mounting bracket and configured to support a rear wall portion of the driving case on a vehicle body member, wherein: the rear wall portion of the driving case includes a projecting portion projecting rearward from the rear wall portion of the driving case and extending in an up-down direction; when a vehicle is viewed from behind, an upper end portion of the projecting portion overlaps with the electric power control device in the up-down direction, and a lower end portion of the projecting portion extends downward toward the differential device; an upper end portion of the rear mounting bracket is fastened to the projecting portion; and a lower end portion of the rear mounting bracket is fastened to a lower portion of the rear wall portion of the driving case.

Consequently, the vehicle driving device according to one embodiment of the present invention can effectively reduce vibration of the vehicle driving device by improving the attachment position of the rear mounting bracket on the driving case.

### [Embodiment]

Hereinafter, a vehicle driving device according to one embodiment of the present invention will be described with reference to drawings.

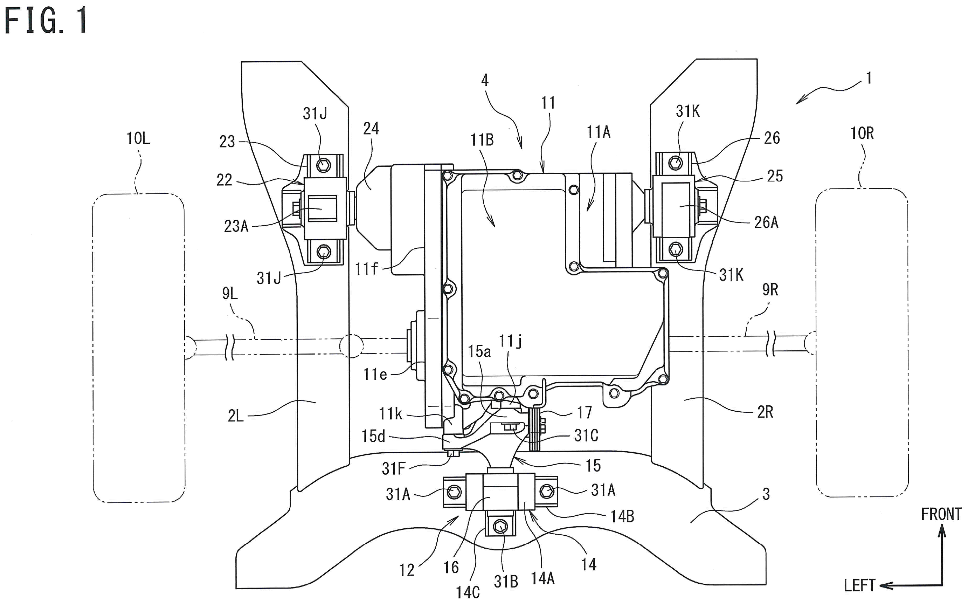

Figure 1 to Figure 7 are diagrams showing the vehicle driving device according to one embodiment of the present invention.

First, the configuration will be described.

In Figure 1 to Figure 7, the up-down direction, the front-rear direction, and the left-right direction are based on directions of the vehicle driving device in a state of being disposed in a vehicle, and the front-rear direction of the vehicle is taken as the front-rear direction, the left-right direction (vehicle width direction) of the vehicle is taken as the left-right direction, and the up-down direction of the vehicle is taken as the up-down direction.

As shown in Figure 1, a vehicle 1 includes a left side member 2L, a right side member 2R, and a cross member 3. The cross member 3 in the present embodiment constitutes a vehicle body member.

The left side member 2L and the right side member 2R are disposed to be spaced apart from each other in the vehicle width direction, and extend in the front-rear direction. The vehicle width direction corresponds to the left-right direction. The cross member 3 extends in the vehicle width direction, and the left and right end portions of the cross member 3 are coupled to the left side member 2L and the right side member 2R.

A driving device 4 is disposed in a space surrounded by the left side member 2L, the right side member 2R, and the cross member 3. The driving device 4 of the present embodiment constitutes a vehicle driving device.

To be more specific, the driving device 4 is disposed in a front portion of the vehicle 1 at a position between the left side member 2L and the right side member 2R in the vehicle width direction and forward of the cross member 3 in the front-rear direction.

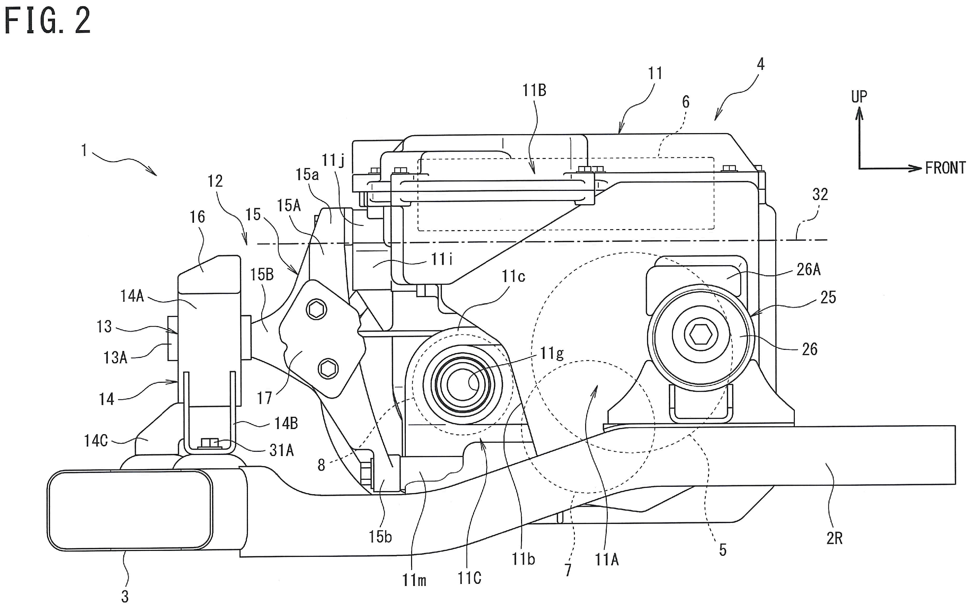

As shown by an imaginary line in Figure 2, the driving device 4 includes a motor generator 5, an inverter 6, a reducer 7, and a differential device 8, the inverter 6 controlling electric power to be supplied to the motor generator 5, the reducer 7 reducing the driving force (rotational speed) of the motor generator, the differential device 8 transmitting the power from the reducer 7 to left and right front wheels 10L and 10R (see Figure 1) via a left drive shaft 9L and a right drive shaft 9R (see Figure 1).

In other words, the driving device 4 transmits a driving force to the left and right front wheels 10L and 10R. The motor generator 5 in the present embodiment constitutes a rotary electric machine, and the inverter 6 constitutes an electric power control device. The front wheels 10L and 10R constitute driving wheels.

The driving device 4 includes a driving case 11. The motor generator 5, the inverter 6, the reducer 7, and the differential device 8 are housed in the driving case 11.

The motor generator 5 has a function as an electric motor and a function as a generator, the electric motor being driven by electric power supplied from a high voltage battery not shown in the drawing via the inverter 6, the generator generating electric power using a reverse driving force inputted from the differential device 8.

The inverter 6 converts DC power supplied from the high voltage battery into three-phase AC power and supplies the AC power to the motor generator 5, or converts three-phase AC power generated by the motor generator 5 into DC power and charges the high voltage battery using the DC power. The high voltage battery is constituted by, for example, a secondary battery, such as a lithium ion battery.

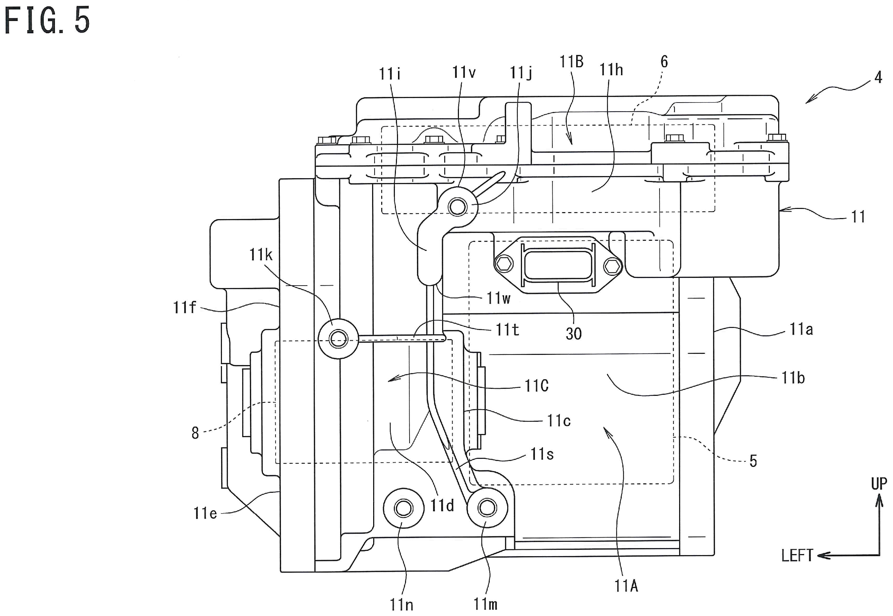

As shown in Figure 2, the differential device 8 is disposed behind the motor generator 5, and the inverter 6 is disposed above the motor generator 5 and the differential device 8 (see Figure 5).

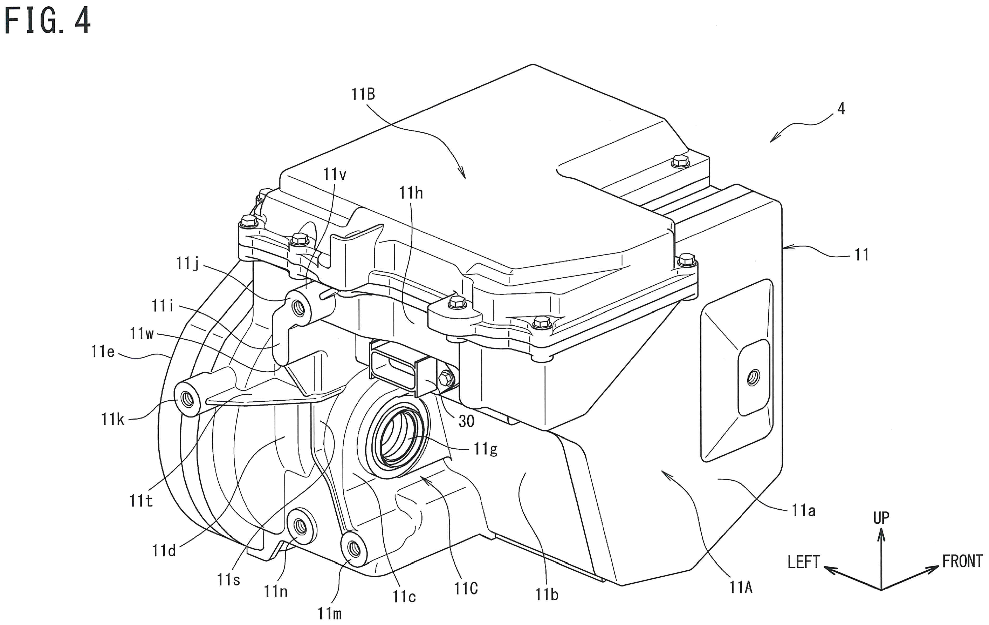

As shown in Figure 4, the driving case 11 includes a motor housing portion 11A, an inverter housing portion 11B, and a differential housing portion 11C, the motor generator 5 and the reducer 7 being housed in the motor housing portion 11A, the inverter 6 being housed in the inverter housing portion 11B, the differential device 8 being housed in the differential housing portion 11C.

The inverter housing portion 11B is constituted by the entire upper portion of the driving case 11. The differential housing portion 11C projects rearward from the motor housing portion 11A.

The differential housing portion 11C is disposed offset to the left (one side in the vehicle width direction) relative to the motor housing portion 11A, and the differential device 8 is disposed to the left relative to the motor generator 5 (see Figure 5).

The differential housing portion 11C is formed to have a length in the vehicle width direction that is shorter than the length of the motor housing portion 11A in the vehicle width direction.

To be more specific, as shown in Figure 4 and Figure 5, a rear wall portion 11b of the motor housing portion 11A is joined to the rear end portion of a right side wall portion 11a of the motor housing portion 11A, and the rear wall portion 11b extends leftward from the rear end portion of the right side wall portion 11a of the motor housing portion 11A.

The differential housing portion 11C includes a right side wall portion 11c, a rear wall portion 11d, and a left side wall portion 11e, the right side wall portion 11c extending rearward from the left end portion of the rear wall portion 11b, the rear wall portion 11d extending leftward from the rear end portion of the right side wall portion 11c, the left side wall portion 11e extending forward from the left end portion of the rear wall portion 11d and being joined to a left side wall portion 11f of the motor housing portion 11A.

In this manner, the differential housing portion 11C is formed to have a smaller thickness in the vehicle width direction than a thickness of the motor housing portion 11A. The motor housing portion 11A in the present embodiment constitutes a rotary electric machine housing portion.

Power is transmitted from the reducer 7 to the differential device 8, which is housed in the differential housing portion 11C as shown by an imaginary line in Figure 5.

As shown in Figure 2 and Figure 4, the right side wall portion 11c has a through hole 11g, through which the right drive shaft 9R penetrates, and the left side wall portion 11e has a through hole not shown in the drawing, through which the left drive shaft 9L penetrates.

A rear wall portion 11h of the inverter housing portion 11B is joined to the upper portion of the rear wall portion 11d of the differential housing portion 11C.

The rear wall portion 11h of the inverter housing portion 11B extends from the right end portion to the left end portion of the driving case 11, and the rear wall portion 11h is joined to the upper portion of the differential housing portion 11C within the range of the thickness of the differential housing portion 11C in the vehicle width direction.

A driving source, left and right rear drive shafts, and left and right rear wheels are disposed in the rear portion of the vehicle 1, power from the driving source being transmitted to the left and right rear drive shafts. None of the driving source, the left and right rear drive shafts, or the left and right rear wheels are shown in the drawing.

When only the driving device 4 disposed on the front side is driven, the vehicle 1 of the present embodiment travels in a two-wheel drive mode, whereas when both the driving device 4 and the driving source disposed on the rear side are driven, the vehicle 1 of the present embodiment travels in a four-wheel drive mode. The driving source disposed on the rear side is not particularly limited.

The driving device 4 disposed on the front side may use an internal combustion engine and a motor as driving sources, instead of using the motor as the driving source in the present embodiment.

As shown in Figure 1 and Figure 2, the rear portion of the driving case 11, that is, the rear wall portion 11h of the inverter housing portion 11B and the rear wall portion 11d of the differential housing portion 11C, are elastically supported on the cross member 3 by the mounting device 12.

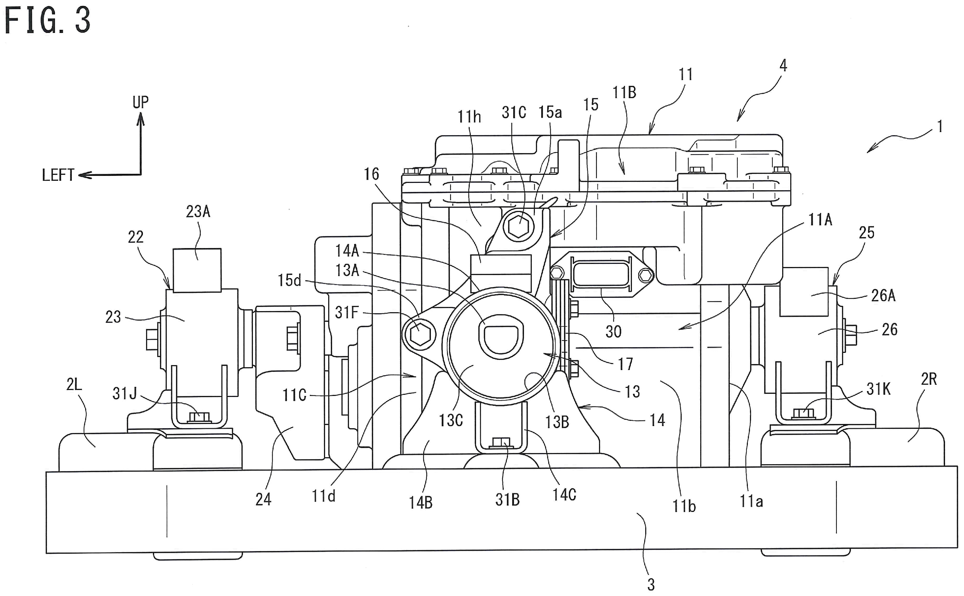

As shown in Figure 3, the mounting device 12 includes a mounting bush 13, a mounting portion 14, a mounting bracket 15, and masses 16 and 17.

The mounting bush 13 includes an inner sleeve 13A, an outer sleeve 13B, and a mounting rubber 13C, and is formed to have a cylindrical shape as a whole, the center axis of the inner sleeve 13A extending in the front-rear direction, the outer sleeve 13B being provided outward of the inner sleeve 13A in the radial direction, the center axis of the outer sleeve 13B extending in the front-rear direction, the mounting rubber 13C being provided between the inner sleeve 13A and the outer sleeve 13B in the radial direction to join the inner sleeve 13A to the outer sleeve 13B.

The mounting portion 14 includes a cylindrical portion 14A, a first leg portion 14B, and a second leg portion 14C, the cylindrical portion 14A having a cylindrical shape extending in the front-rear direction.

As shown in Figure 1 and Figure 2, the first leg portion 14B is provided at the lower portion of the cylindrical portion 14A, and extends in the vehicle width direction. The second leg portion 14C is connected to the first leg portion 14B, and extends rearward from the first leg portion 14B.

As shown in Figure 1, the first leg portion 14B and the second leg portion 14C are fixed to the center portion of the cross member 3 in the vehicle width direction with bolts 31A and 31B.

As shown in Figure 3, the mounting bush 13 is press-fitted in the cylindrical portion 14A, and the mounting bush 13 is housed in the cylindrical portion 14A. The mass 16 is fixed to the upper portion of the cylindrical portion 14A by welding or the like.

As shown in Figure 4 and Figure 5, the driving case 11 is provided with a projecting portion 11i serving as a reinforcing member. The projecting portion 11i projects rearward from the rear wall portions 11d and 11h, and extends in the up-down direction across the rear wall portion 11d of the differential housing portion 11C and the rear wall portion 11h of the inverter housing portion 11B. The rear wall portions 11d and 11h in the present embodiment constitute a rear wall portion of a driving case.

As shown in Figure 2, the inverter 6 and the differential device 8 are disposed with a gap therebetween in the up-down direction.

As shown in Figure 5, when the vehicle is viewed from behind, an upper end portion 11v of the projecting portion 11i overlaps with the inverter 6 in the up-down direction, and a lower end portion 11w of the projecting portion 11i extends downward toward the differential device 8.

When the vehicle is viewed from behind, the lower end portion 11w of the projecting portion 11i may overlap with the differential device 8 in the up-down direction.

As shown in Figure 4 and Figure 5, the upper end portion 11v of the projecting portion 11i is provided with an upper boss portion 11j, and the upper boss portion 11j is disposed at the rear wall portion 11h of the inverter housing portion 11B.

The upper boss portion 11j overlaps with the inverter 6 in the up-down direction, and the projecting portion 11i extends downward from the upper boss portion 11j toward the differential device 8.

The lower portion of the differential housing portion 11C is provided with lower boss portions 11m and 11n, and the lower boss portions 11m and 11n face the differential device 8 in the front-rear direction and are arranged side by side in the vehicle width direction.

The upper boss portion 11j is disposed between the lower boss portions 11m and 11n in the vehicle width direction, and the lower boss portions 11m and 11n are disposed on both sides of the upper boss portion 11j in the vehicle width direction.

The rear wall portion 11d of the differential housing portion 11C is provided with an intermediate boss portion 11k at a position between the upper boss portion 11j and the lower boss portions 11m and 11n in the up-down direction, and the intermediate boss portion 11k is disposed to the left relative to the lower boss portion 11n. In other words, the intermediate boss portion 11k is disposed on the opposite side of the lower boss portion 11m with respect to the lower boss portion 11n in the vehicle width direction.

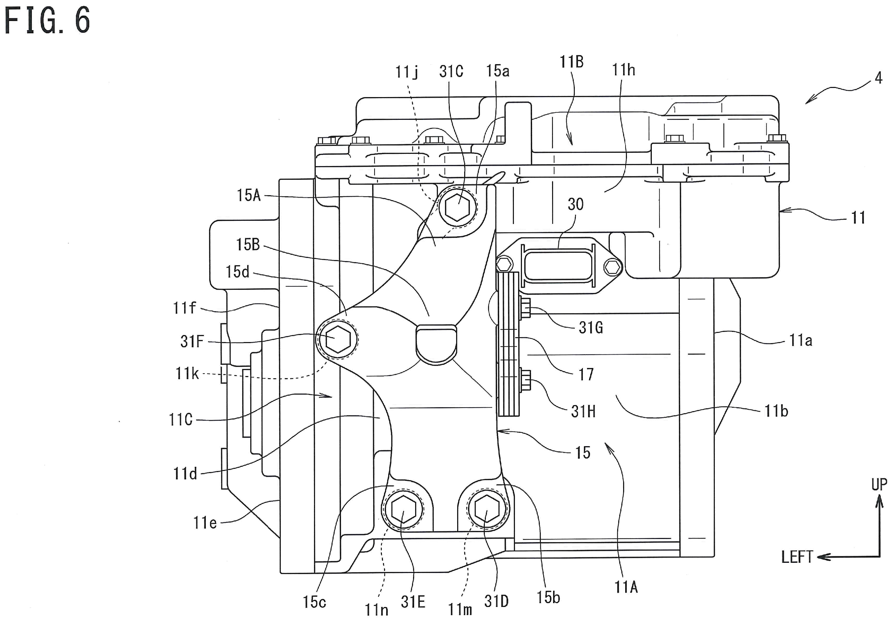

As shown in Figure 2, the mounting bracket 15 includes a front bracket portion 15A and a rear bracket portion 15B, the front bracket portion 15A extending in the up-down direction and being fastened to the rear wall portion 11d of the differential housing portion 11C, the rear bracket portion 15B extending horizontally from the center portion of the front bracket portion 15A in the up-down direction toward the mounting bush 13, the distal end side of the rear bracket portion 15B in the extending direction being press-fitted in the inner sleeve 13A, thus being coupled to the mounting bush 13 (see Figure 6).

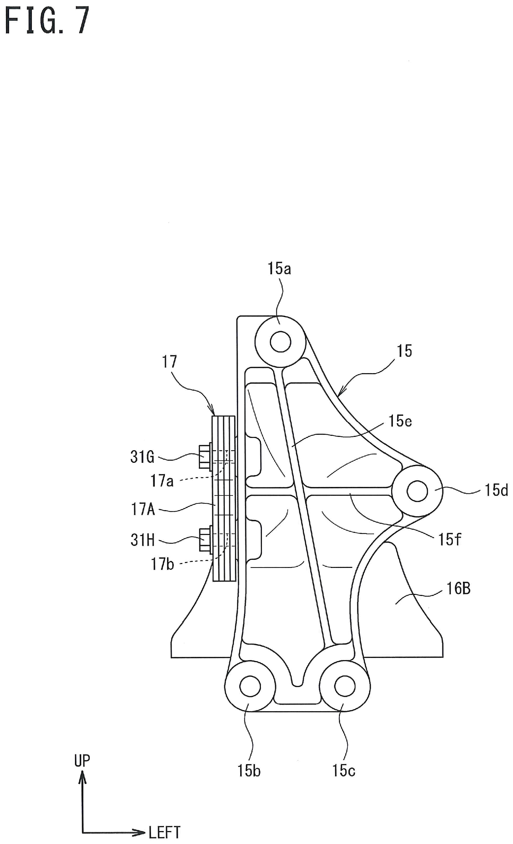

As shown in Figure 6 and Figure 7, the upper end portion of the front bracket portion 15A is provided with an upper fastening portion 15a, and the upper fastening portion 15a is fastened to the upper boss portion 11j with a bolt 31C.

The lower portion of the front bracket portion 15A is provided with lower fastening portions 15b and 15c, and the lower fastening portions 15b and 15c are fastened to the lower boss portions 11m and 11n with bolts 31D and 31E.

In other words, the mounting bracket 15 is fastened to the inverter housing portion 11B, in which the inverter 6 is housed, and to the differential housing portion 11C, in which the differential device 8 is housed.

The front bracket portion 15A is provided with an intermediate fastening portion 15d at a position between the upper fastening portion 15a and the lower fastening portions 15b and 15c in the up-down direction, and the intermediate fastening portion 15d is provided on the left side surface (one side portion) of the front bracket portion 15A in the vehicle width direction. The intermediate fastening portion 15d is fastened to the intermediate boss portion 11k with a bolt 31F.

In other words, the intermediate fastening portion 15d fastens one side portion of the front bracket portion 15A in the vehicle width direction to the differential housing portion 11C. The intermediate fastening portion 15d in the present embodiment constitutes a fastening portion.

As shown in Figure 6, the mass 17 is attached to the other side portion of the front bracket portion 15A. The mass 17 is provided with an upper fastening portion 17a and a lower fastening portion 17b, which are spaced apart from each other in the up-down direction, a bolt 31G being inserted through the upper fastening portion 17a, a bolt 31H being inserted through the lower fastening portion 17b (see Figure 7).

The upper fastening portion 17a is located at a position higher than the intermediate fastening portion 15d (the intermediate boss portion 11k), and the lower fastening portion 17b is located at a position lower than the intermediate fastening portion 15d (the intermediate boss portion 11k).

In other words, the intermediate fastening portion 15d (the intermediate boss portion 11k) is located between the upper fastening portion 17a and the lower fastening portion 17b in the up-down direction. The upper fastening portion 17a in the present embodiment constitutes an upper fastening point, and the lower fastening portion 17b in the present embodiment constitutes a lower fastening point.

The mass 17 is constituted by a plate-like member group in which four plate-like members 17A are stacked in the plate thickness direction, thus forming an integral body, and the weight of the mass 17 can be changed by adjusting the number of plate-like members 17A. The plate thickness direction corresponds to the vehicle width direction. The plate-like members 17A are integrally formed by arc welding or the like.

The mounting device 12 in the present embodiment constitutes a rear mounting device, and the mounting bracket 15 constitutes a rear mounting bracket.

As shown in Figure 4 and Figure 5, the rear wall portion 11d of the differential housing portion 11C is provided with a longitudinal rib 11s, and the longitudinal rib 11s is coupled to the projecting portion 11i and the lower boss portion 11m.

The rear wall portion 11d of the differential housing portion 11C is provided with a lateral rib 11t, and the lateral rib 11t couples the longitudinal rib 11s to the intermediate boss portion 11k. Consequently, the longitudinal rib 11s and the lateral rib 11t can increase the rigidity of the rear wall portion 11d of the differential housing portion 11C, and can further increase the rigidity of the projecting portion 11i and the intermediate boss portion 11k.

As shown in Figure 1 and Figure 3, the driving case 11 is elastically supported on the left side member 2L by a left mounting device 22.

The left mounting device 22 includes a mounting portion 23, a mass 23A, and a mounting bracket 24, the mounting portion 23 holding an elastic member and being connected to the left side member 2L with a bolt 31J, the mass 23A being provided at the mounting portion 23, the mounting bracket 24 coupling the elastic member, which is held by the mounting portion 23, to the driving case 11. The driving case 11 is connected to the mounting portion 23 via the mounting bracket 24.

The driving case 11 is elastically supported on the right side member 2R by a right mounting device 25.

The right mounting device 25 includes a mounting portion 26 and a mass 26A, the mounting portion 26 holding an elastic member and being connected to the right side member 2R with a bolt 31K, the mass 26A being provided at the mounting portion 26. The mounting portion 26 is directly connected to the driving case 11 via the elastic member.

In other words, the driving device 4 is elastically supported on the left side member 2L, the right side member 2R, and the cross member 3 in such a way as to be placed on the left side member 2L, the right side member 2R, and the cross member 3 via the mounting device 12, the left mounting device 22, and the right mounting device 25.

As shown in Figure 7, the rear surface of the front bracket portion 15A is provided with a longitudinal rib 15e. The longitudinal rib 15e connects the upper fastening portion 15a to the lower fastening portion 15c.

The rear surface of the front bracket portion 15A is provided with a lateral rib 15f. The lateral rib 15f connects the intermediate fastening portion 15d to the other side portion of the front bracket portion 15A via the longitudinal rib 15e.

In this manner, the mounting bracket 15 is reinforced by the longitudinal rib 15e and the lateral rib 15f, thereby exhibiting high bending rigidity in the front-rear direction and the left-right direction.

As shown in Figure 3, the rear wall portion 11b of the motor housing portion 11A is provided with an inverter connector 30, and one end portion of a wire harness not shown in the drawing is coupled to the inverter connector 30. The other end portion of the wire harness is coupled to, for example, a low voltage battery.

The inverter connector 30 is coupled to the inverter 6 via a wire harness not shown in the drawing, and electric power from the low voltage battery is supplied to the inverter 6. The connector may be coupled to an auxiliary battery or other batteries.

Next, the effects of the driving device 4 of the present embodiment will be described.

The driving device 4 of the present embodiment includes: the motor generator 5; the differential device 8 disposed behind the motor generator 5 and configured to transmit power from the motor generator 5 to the front wheels 10L and 10R; and the inverter 6 disposed above the motor generator 5 and the differential device 8.

In addition to the above, the driving device 4 includes: the driving case 11 configured to house the motor generator 5, the differential device 8, and the inverter 6; and the mounting device 12 including the mounting bracket 15 and configured to support the rear wall portion of the driving case 11 (the rear wall portion 11h of the inverter housing portion 11B and the rear wall portion 11d of the differential housing portion 11C) on the cross member 3.

The rear wall portion 11h of the inverter housing portion 11B and the rear wall portion 11d of the differential housing portion 11C include the projecting portion 11i projecting rearward from the rear wall portions 11h and 11d and extending in the up-down direction.

When the vehicle is viewed from behind, the upper end portion 11v of the projecting portion 11i overlaps with the inverter 6 in the up-down direction, and the lower end portion 11w of the projecting portion 11i extends downward toward the differential device 8.

The upper fastening portion 15a provided at the upper end portion of the mounting bracket 15 is fastened to the projecting portion 11i, and the lower fastening portions 15b and 15c provided at the lower end portion of the mounting bracket 15 are fastened to the lower portion of the rear wall portion 11d.

In this manner, the projecting portion 11i, which projects rearward from the rear wall portions 11d and 11h and extends in the up-down direction, is provided at the rear wall portions 11d and 11h of the driving case 11, the upper end portion 11v of the projecting portion 11i overlaps with the inverter 6 in the up-down direction, the lower end portion 11w of the projecting portion 11i extends downward toward the differential device 8, and the upper fastening portion 15a of the mounting bracket 15 is fastened to the projecting portion 11i. Accordingly, the rigidity of the rear wall portions 11d and 11h can be increased in the vicinity of the boundary between the inverter 6 and the differential device 8.

The upper fastening portion 15a of the mounting bracket 15 is fastened to the projecting portion 11i exhibiting high rigidity and hence, the supporting rigidity of the mounting bracket 15 with respect to the driving case 11 can be increased. Therefore, vibration transmitted from the driving device 4 to the cross member 3 via the mounting device 12 can be suppressed, thereby reducing noise generated from the driving device 4 and discomfort caused by vibration.

The projecting portion 11i is provided in the vicinity of the boundary between the inverter 6 and the differential device 8, and therefore the strength of the entire driving case 11 can be increased, thereby increasing durability of the driving device 4.

The driving case 11 in the present embodiment includes the differential housing portion 11C projecting rearward from the motor housing portion 11A, and the length of the differential housing portion 11C in the vehicle width direction is shorter than the length of the motor housing portion 11A in the vehicle width direction and hence, the rigidity of the differential housing portion 11C is lower than the rigidity of the motor housing portion 11A and the rigidity of the inverter housing portion 11B.

Therefore, the projecting portion 111 is provided in such a way as to join the rear wall portion 11h of the inverter housing portion 11B to the rear wall portion 11d of the differential housing portion 11C. Accordingly, the rigidity of the rear wall portions 11d and 11h can be increased by the projecting portion 11i, and therefore vibration transmitted from the driving device 4 to the cross member 3 via the mounting device 12 can be more effectively suppressed.

In addition, the resonance frequency of the inverter 6 and the differential device 8 can be changed by the projecting portion 11i and hence, it is possible to avoid resonance, at a particular frequency, of vibration transmitted from the driving device 4 to the cross member 3.

In this manner, in the driving device 4 of the present embodiment, the attachment position of the mounting bracket 15 on the driving case 11 is improved and hence, vibration of the driving device 4 can be effectively reduced.

In the driving device 4 of the present embodiment, the intermediate fastening portion 15d fastened to the driving case 11 is provided at the left side portion of the mounting bracket 15, and the mass 17 is provided at the right side portion of the mounting bracket 15.

Consequently, by adjusting the weight of the mass 17, it is possible to prevent the mounting bracket 15 from resonating due to the vibration of the differential housing portion 11C when the differential housing portion 11C vibrates in the left-right direction at a specific frequency (for example, eighth-order frequency of the motor generator 5), and therefore lateral shaking of the differential housing portion 11C can be suppressed.

In the driving device 4 of the present embodiment, the mass 17 is constituted by the plate-like member group in which the plurality of plate-like members 17A are stacked in the plate thickness direction to form an integral body.

Consequently, the resonance frequency of the cross member 3 together with the mounting device 12 can be changed and hence, vibration transmitted from the driving device 4 to the cross member 3 can be reduced.

The weight of the mass 17 can be easily changed by adjusting the number of plate-like members 17A and hence, the versatility of the mounting device 12 can be improved compared with a case in which the mass 17 is formed of a single mass block where weight adjustment is not possible.

In addition to the above, the thin plate-like members 17A of the mounting device 12 are individually pressed, and therefore the mass 17 can be easily formed at a low cost.

Therefore, by combining the pressed plate-like members 17A, the cross-sectional shape of the mass 17 can be suitably changed according to the layout of surrounding components, and as a result, the manufacturing costs of the mounting device 12 can be reduced.

Since the mounting device 12 includes the mass 16, the resonance frequency of the cross member 3 together with the mounting device 12 can be more finely changed, and therefore vibration transmitted from the driving device 4 to the cross member 3 can be more effectively reduced.

Each of the masses 23A and 26A is also constituted by a plate-like member group in which a plurality of plate-like members are stacked in the plate thickness direction to form an integral body. The left mounting device 22 and the right mounting device 25 can also obtain the above-described effects.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 3 cross member (vehicle body member), 4 driving device (vehicle driving device), 5 motor generator (rotary electric machine), 6 inverter (electric power control device), 8 differential device, 10L and 10R front wheel (driving wheel), 11 driving case, 11d and 11h rear wall portion (rear wall portion of driving case), 11i projecting portion, 11v upper end portion (upper end portion of projecting portion), 11w lower end portion (lower end portion of projecting portion), 15 mounting bracket (rear mounting bracket), 15d intermediate fastening portion (fastening portion), 17 mass (weight), 17A plate-like member

## Claims

1. A vehicle driving device (4) comprising:
a rotary electric machine (5); a differential device (8) disposed behind the rotary electric machine (5) and configured to transmit power from the rotary electric machine (5) to a driving wheel (10L and 10R); an electric power control device (6) disposed above the rotary electric machine (5) and the differential device (8) and configured to control electric power to be supplied to the rotary electric machine (5); a driving case (11) configured to house the rotary electric machine (5), the differential device (8), and the electric power control device (6); and a rear mounting device (12) including a rear mounting bracket (15) and configured to support a rear wall portion of the driving case (11) on a vehicle body member (3), the vehicle driving device (4) being **characterized in that**:
the rear wall portion of the driving case (11) includes a projecting portion (111) projecting rearward from the rear wall portion of the driving case (11) and extending in an up-down direction;
when a vehicle is viewed from behind, an upper end portion (11v) of the projecting portion (11i) overlaps with the electric power control device (6) in the up-down direction, and a lower end portion (11w) of the projecting portion (11i) extends downward toward the differential device (8);
an upper end portion of the rear mounting bracket (15) is fastened to the projecting portion (11i); and
a lower end portion of the rear mounting bracket (15) is fastened to a lower portion of the rear wall portion of the driving case (11).

2. The vehicle driving device (4) according to claim 1, wherein:
a fastening portion (15d) fastened to the driving case (11) is provided at one side portion of the rear mounting bracket (15) in a vehicle width direction; and
a weight (17) is attached to another side portion of the rear mounting bracket (15) in the vehicle width direction.

3. The vehicle driving device (4) according to claim 2, wherein
the weight is constituted by a plate-like member group in which a plurality of plate-like members (17A) are stacked in a plate thickness direction to form an integral body.
